# EUROPEAN PATENT APPLICATION

(11) **EP 3 715 192 A1**
(43) Date of publication of application: **30.09.2020**
(21) Application number: 19165259.3
(22) Date of filing: 26.03.2019
(51) Int. Cl.: B60S 1/48, B60S 1/50, F01P 11/00

(54) **A WASHER FLUID ARRANGEMENT**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); JOHANSSON, Jonathan, 417 14 GÖTEBORG (SE)
(74) Representative: Zacco Sweden AB

(57) **Abstract**

The invention relates to a washer fluid arrangement (2) for a vehicle (1). The arrangement comprises a nozzle (7) for spraying washer fluid on the vehicle. The arrangement further comprises a connecting means (8) by which connecting means a cooling system (4) of the vehicle and the nozzle (7) are fluidly connectable to each other, for spraying coolant provided by the cooling system (4) as washer fluid (20) on the vehicle (1) by means of the nozzle (7).

## Description

### TECHNICAL FIELD

The invention relates to a washer fluid arrangement for a vehicle, and a method for providing washer fluid of a vehicle.

### BACKGROUND

Vehicles usually have a washer fluid arrangement for providing washer fluid to a windshield or a headlamp of the vehicle.

For improving the effectiveness of the washer fluid a heating system for heating the washer fluid can be used. Such a heating system which heats the washer fluid electrically or by heat exchange from an engine coolant requires additional components and an increased packing space in the engine compartment.

### SUMMARY

An objective of the invention is to provide a washer fluid arrangement, by which arrangement washer fluid of relatively high temperature can be provided at the same time as the packing space and number of components required can be reduced.

The objective is achieved by a washer fluid arrangement for a vehicle, wherein the arrangement comprises a nozzle for spraying washer fluid on the vehicle, and the arrangement comprises a connecting means by which connecting means a cooling system of the vehicle and the nozzle are fluidly connectable to each other, for spraying coolant provided by the cooling system as washer fluid on the vehicle by means of the nozzle.

The invention is based on the insight that by such washer fluid arrangement, a fluid already heated by a component of the vehicle can be used as washer fluid. Hereby a cost-effective design for providing heated washer fluid can be achieved.

For example, coolant from an engine cooling system can be used as washer fluid, such as coolant used in cooling systems for cooling an internal combustion engine or an electric motor, but also coolant of other cooling systems of a vehicle, such as coolant for cooling batteries, electrical components or computers, can be used.

The coolant can be any liquid suitably both for a cooling system and a washer fluid arrangement. The coolant should preferably be able to withstand high temperatures, lower the freezing point and provide washing properties required for cleaning a windshield. One example of such a liquid is propylene glycol. Other possible liquids are glycerol and ethanol.

According to one embodiment of the washer fluid arrangement, the connecting means comprises a reservoir for coolant which reservoir is fluidly connectable to the cooling system and to the nozzle. Hereby, the nozzle can be connected to the cooling system in a rational and non-complicated way.

The reservoir is preferably a coolant expansion reservoir for the cooling system. Hereby, the number of reservoirs required can be reduced, since the coolant expansion reservoir connectable to the nozzle can replace both a conventional coolant expansion reservoir and a washer fluid tank.

The reservoir can have a pipe-connector for connection to the nozzle. The pipe connector can be directly connectable to the nozzle or connectable to a pipe circuit extending to the nozzle or to a pump which in turn is connected to the nozzle.

According to a further embodiment, the arrangement comprises a pump for pumping coolant from the cooling system to the nozzle. Hereby, coolant can be transported from the cooling system to the nozzle. The pump can be arranged between a reservoir for coolant of the cooling system and the nozzle. For example, the pump can be arranged in a pipe circuit connecting the reservoir and the nozzle.

According to a further embodiment, the arrangement comprises a control unit for controlling spraying of washer fluid, and the control unit is configured to allow spraying of coolant provided by the cooling system as washer fluid, provided that the amount of coolant in the cooling system is above a predetermined threshold value. Hereby, coolant can be used as washer fluid as long as the amount of coolant in the cooling system is sufficient at the same time as the cooling capability is secured.

For example, spraying of coolant provided by the cooling system as washer fluid can be allowed provided that the level of coolant in a coolant reservoir is above a predetermined threshold value. The control unit is preferably configured to control a pump such that coolant can be pumped from the cooling system to the nozzle provided that the amount of coolant in the cooling system is above a predetermined threshold value.

According to further aspects of the invention, further objectives are to provide a cooling system for a vehicle, a vehicle and a method for providing washer fluid of a vehicle.

The advantages of the cooling system, vehicle and the method are substantially the same as the advantages already discussed hereinabove with reference to the different embodiments of the washer fluid arrangement.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a schematic view showing a vehicle with a cooling system and a washer fluid arrangement,
Fig. 2 is a variant of the cooling system illustrated in Fig. 1,
Fig. 3 is a schematic view showing another embodiment of a cooling system and a washer fluid arrangement for a vehicle, and
Fig. 4 is a flow chart of a method for providing washer fluid of a vehicle.

### DETAILED DESCRIPTION OF EXAMPLE EMBODIMENTS

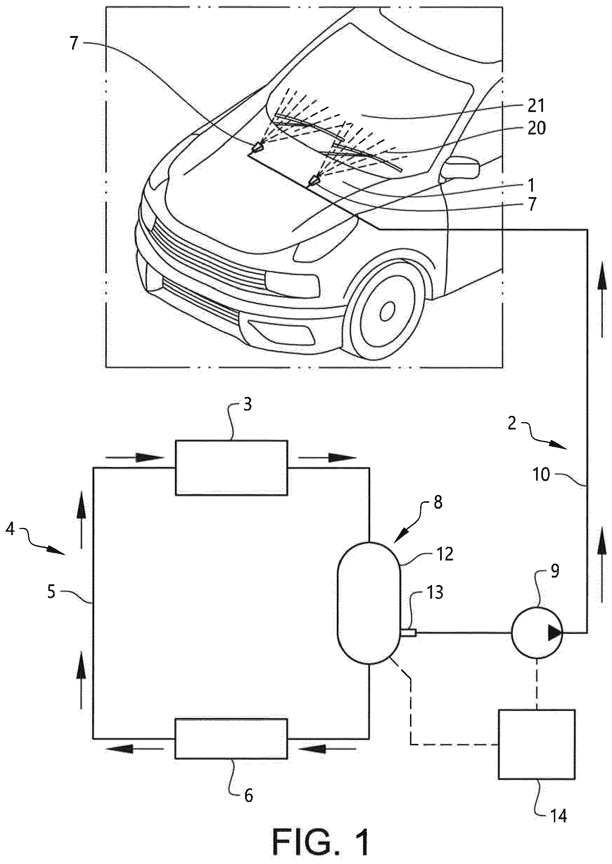

Fig. 1 shows a vehicle 1 and a washer fluid arrangement 2 for the vehicle 1. The vehicle 1 comprises a component 3, such as an engine for instance, and a cooling system 4. The cooling system 4 has a pipe circuit 5 for circulating a coolant for cooling the component 3. Further, the cooling system 4 suitably has a heat exchanger 6, such as a radiator, for removing heat from the coolant. The cooling system 4 may be an engine cooling system as exemplified in Fig. 1 or a cooling system for another component of the vehicle. The cooling system 4 may comprise further components not discribed herein.

The washer fluid arrangement 2 has one or more nozzles 7 for spraying washer fluid 20 on the vehicle 1. The nozzle 7 can be arranged to direct washer fluid towards a windshield 21 or a headlamp of the vehicle 1.

The washer fluid arrangement 2 comprises a connecting means 8 by which connecting means the cooling system 4 of the vehicle 1 and the nozzle 7 are fluidly connectable to each other for spraying coolant as washer fluid 20 on the vehicle 1 by means of the nozzle 7. The connecting means 8 may comprise a pipe and/or a valve and/or a pipe connector arranged to connect the cooling system 4 and the nozzle 7 for achieving fluid communication between the cooling system 4 and the nozzle 7.

Further, the washer fluid arrangement 2 may comprise pump 9 for pumping coolant from the cooling system 4 to the nozzle 7. In the example embodiment illustrated in Fig. 1, the washer fluid arrangement 2 comprises a pipe portion 10 arranged to extend from the pipe circuit 5 to the nozzle 7. The pump 9 is arranged for pumping coolant from the pipe circuit 5 to the pipe portion 10 and further to the nozzle 7.

The connecting means 8 can comprise a reservoir 12 for coolant which reservoir is fluidly connectable to the cooling system 4 and to the nozzle 7. The coolant reservoir 12 is preferably a coolant expansion reservoir 12 for the cooling system 4 which reservoir is fluidly connected to the pipe circuit 5 of the cooling system 4. The coolant reservoir 12 has suitably a pipe connector 13 for connection to the nozzle 7. By means of the pipe connector 13, the coolant reservoir 12 can be directly connected to the nozzle or to another component which in turn is connected to the nozzle 7. In the example embodiment illustrated in Fig. 1, the coolant reservoir 12 is connected to the pipe portion 10 extending to the nozzle 7.

The volume of the coolant reservoir 12 is suitably adapted to the cooling system 4 as well as to the washer fluid arrangement 2 enabling the coolant reservoir to be a combined coolant expansion reservoir and a washer fluid tank.

The washer fluid arrangement 2 preferably comprises a control unit 14 for controlling spraying of washer fluid. The control unit 14 is configured to allow spraying of coolant provided by the cooling system 4 as washer fluid, provided that the amount of coolant in the cooling system is above a predetermined threshold value. For example, the control unit 14 can be configured to allow spraying of coolant provided by the cooling system 4 as washer fluid, provided that the level of coolant in the coolant reservoir 12 is above a predetermined threshold value.

In the example embodiment illustrated in Fig. 1, the control unit 14 is configured to control the pump 9 such that coolant can be pumped from the cooling system 4 to the nozzle 7 provided that the amount of coolant in the cooling system 4 is above a predetermined threshold value.

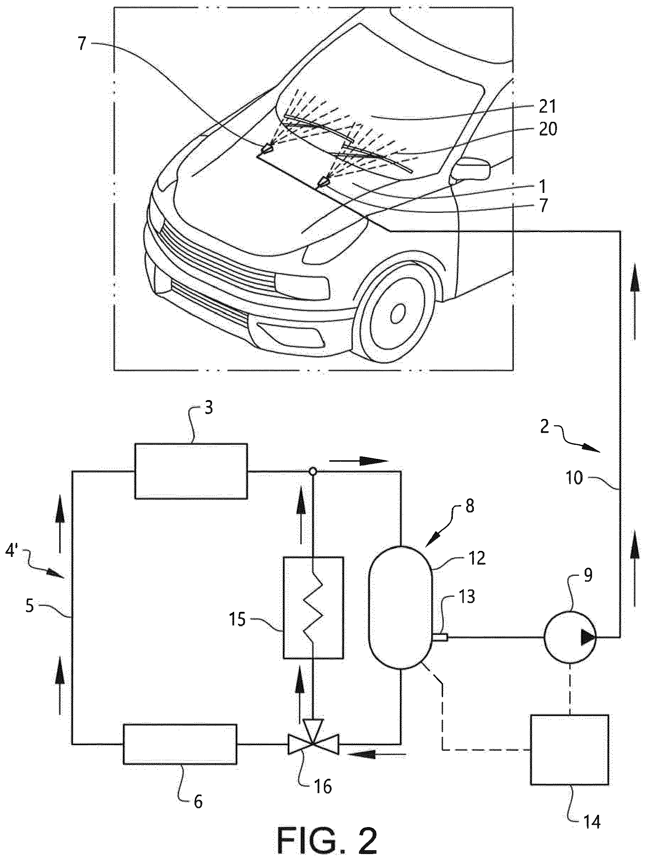

Fig. 2 shows the vehicle 1 with a variant of the cooling system illustrated in Fig. 1. As previously mentioned, the coolant will often have a temperature suitable for providing a hot washer or wiper fluid, since the coolant will be heated by the component 3, even if heat generated by the component 3 also is transferred from the coolant to another fluid or air by the heat exchanger 6.

As an example, the component 3 can be an internal combustion engine. In such a case, the coolant will be heated only during operation of the internal combustion engine. Before a cold start of the internal combustion engine, the temperature of the coolant may optionally be increased by a heater in order to improve the efficiency of the washer fluid. As soon as the internal combustion engine has been running for a while, the temperature of the coolant suitable for washer fluid will be maintained without any impact from the heater.

As illustrated in Fig. 2, the vehicle 1 may comprise a heater 15. The heater 15 is arranged for pre-heating the coolant before the coolant has reached the desired temperature. The heater 15 can be an electric or fuel operated supplemental heater. The heater 15 can be used also for other heating purposes of the vehicle 1. The cooling system 4' suitably comprises a valve 16 for directing coolant to the heater 15 instead of the heat exchanger 6 during pre-heating of the coolant, making it possible to heat the coolant by the heater 15 when no or insufficient heat is transferred from the component 3 to the coolant and no or negligible cooling of the component 3 is required. After the pre-heating has been performed, the heater 15 can be disconnected by the valve 16, and the coolant is then instead circulated from the coolant reservoir 12 to the heat exchanger 6 and further to the component 3 for cooling the component 3.

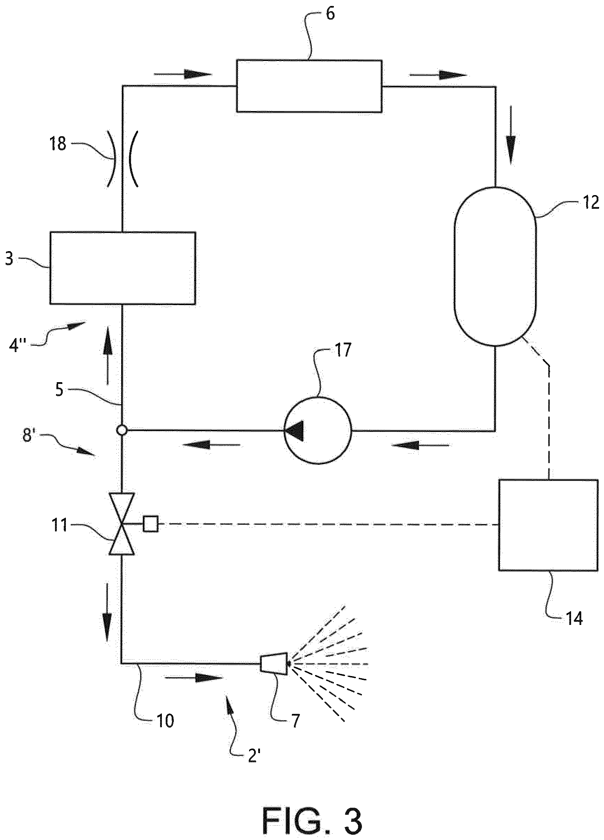

Fig. 3 shows another example embodiment of the cooling system 4" and the washer fluid arrangement 2' of the vehicle (not shown), where a relatively high pressure of the coolant in the cooling system 4" is used for providing coolant to the nozzle 7. The cooling system 4" has a pump 17 for circulating the coolant in the pipe circuit 5. The circulation direction is from the coolant expansion reservoir 12 to the component 3 and further to the heat exchanger 6. Between the component 3 and the heat exchanger 6 a throttle valve 18 is arranged in the pipe circuit 5.

The connecting means 8' of the washer fluid arrangement 2' comprises the pipe portion 10 and a valve 11. The pipe portion 10 extends from the pipe circuit 5 of the cooling system 4" to the valve 11 and further to the nozzle 7. The valve 11 is arranged for opening/closing the fluid communication between the cooling system 4 and the nozzle 7. Then, the control unit 14 can be arranged to control the valve 11 for allowing coolant to be transported to the nozzle 7. Hereby, a washer fluid pump can be omitted.

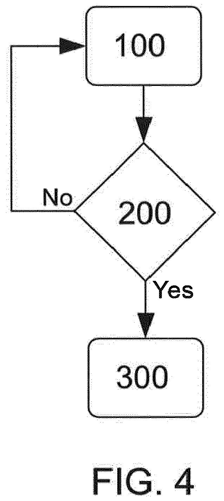

Fig. 4 is a flow chart of one example embodiment of the method according to the invention. The method is used for providing washer fluid of a vehicle comprising the step of spraying coolant from a cooling system of the vehicle as washer fluid. Reference is also made to Figs. 1, 2 and 3 with respect to the system components mentioned when describing the method.

In a first step 100 the control unit 14 receives a request for spraying washer fluid 20. In a second step 200, it is checked if the amount of coolant in the cooling system 4 is above a predetermined threshold value. For example, the level of coolant in the coolant reservoir 12 of the vehicle 1 has to be above a predetermined threshold value. If "YES", then in a third step 300 the control unit 14 allows spraying of coolant as washer fluid through the nozzle 7. The control unit 14 is suitably arranged to control the pump 9 (Fig. 1) of the pipe portion 10, or the valve 11 (Fig. 3), for providing the coolant from the cooling system 4 to the nozzle 7. Otherwise, if "NO", no washer fluid from the cooling system 4 can be provided until additional coolant has been supplied to the cooling system 4 such that the amount of coolant in the cooling system 4 is above the pre-determined threshold value.

It is to be understood that the present invention is not limited to the embodiments described above and illustrated in the drawings; rather, the skilled person will recognize that many changes and modifications may be made within the scope of the appended claims.

## Claims

1. A washer fluid arrangement (2) for a vehicle (1), the arrangement (2) comprising a nozzle (7) for spraying washer fluid (20) on the vehicle, **characterized in that** the arrangement (2) comprises a connecting means (8) by which connecting means a cooling system (4) of the vehicle and the nozzle (7) are fluidly connectable to each other, for spraying coolant provided by the cooling system (4) as washer fluid (20) on the vehicle (1) by means of the nozzle (5).

2. An arrangement according to claim 1, **characterized in that** the connecting means (8) comprises a reservoir (12) for coolant which reservoir is fluidly connectable to the cooling system (4) and to the nozzle (7).

3. An arrangement according to claim 2, **characterized in that** the coolant reservoir (12) has a pipe connector (13) for connection to the nozzle (7).

4. An arrangement according to claim 2 or 3, **characterized in that** the coolant reservoir is a coolant expansion reservoir (12) for the cooling system (4).

5. An arrangement according to any preceding claim, **characterized in that** the arrangement (2) comprises a pump (9) for pumping coolant from the cooling system (4) to the nozzle (7).

6. An arrangement according to any preceding claim, **characterized in that** the arrangement (2) comprises a control unit (14) for controlling spraying of washer fluid (20), the control unit (14) being configured to allow spraying of coolant provided by the cooling system (4) as washer fluid, provided that the amount of coolant in the cooling system (4) is above a predetermined threshold value.

7. An arrangement according to claim 2 and 6, **characterized in that** the control unit (14) is configured to allow spraying of coolant provided by the cooling system (4) as washer fluid (20), provided that the level of coolant in the coolant reservoir (12) is above a predetermined threshold value.

8. An arrangement according to claim 5 and 6, **characterized in that** the control unit (14) is configured to control the pump (9) such that coolant can be pumped from the cooling system (4) to the nozzle (7) provided that the amount of coolant in the cooling system is above a predetermined threshold value.

9. An arrangement according to any preceding claim, **characterized in that** an engine cooling system (4) of the vehicle (1) and the nozzle (7) are fluidly connectable to each other by the connecting means (8).

10. A cooling system (4) for a vehicle, the system comprising a pipe circuit (5) for circulating a coolant for cooling a component (3) of the vehicle (1), **characterized in that** the pipe circuit (5) is fluidly connectable to a nozzle (7) of the vehicle for spraying coolant as washer fluid (20) on the vehicle (1).

11. A vehicle (1) comprising a component (3) and a cooling system (4), the cooling system having a pipe circuit (5) for circulating a coolant for cooling the component (3), the vehicle (1) further comprising a washer fluid arrangement (2) having a nozzle (7) for spraying washer fluid on the vehicle, **characterized in that** the vehicle (1) comprises a connecting means (8) by which connecting means the cooling system (4) of the vehicle and the nozzle (7) are fluidly connectable to each other for spraying coolant as washer fluid (20) on the vehicle (1).

12. A vehicle according to claim 11, **characterized in that** the vehicle (1) comprises a coolant expansion reservoir (12) fluidly connected to the pipe circuit (5), the coolant expansion reservoir (12) being fluidly connectable to the nozzle (7).

13. A vehicle according to claim 11 or 12, **characterized in that** the nozzle (7) is arranged to direct washer fluid towards a windshield (21) or a headlamp of the vehicle (1).

14. A vehicle according to any of claims 11-13, **characterized in that** the vehicle (1) comprises a heater (15) arranged for heating the coolant.

15. A method for providing washer fluid of a vehicle (1), **characterized by** spraying coolant from a cooling system (4) of the vehicle (1) as washer fluid (20).
